# EUROPEAN PATENT SPECIFICATION

(11) **EP 4 687 366 B1**
(45) Date of publication and mention of the grant of the patent: **07.10.2026**
(21) Application number: 25192410.6
(22) Date of filing: 29.07.2025
(51) Int. Cl.: H04W 52/02, H04W 76/10

(54) **SYSTEMS FOR AND METHODS FOR LOW LATENCY NETWORK COMMUNICATION PATHS**
SYSTEME UND VERFAHREN FÜR NETZWERKKOMMUNIKATIONSWEGE MIT NIEDRIGER LATENZ
SYSTÈMES ET PROCÉDÉS POUR CHEMINS DE COMMUNICATION DE RÉSEAU À FAIBLE LATENCE

(30) Priority: 30.07.2024 US 202418788609
(43) Date of publication of application: 04.02.2026
(73) Proprietor: Avago Technologies International Sales Pte. Limited, Singapore 768923 (SG)
(72) Inventor: Mamidwar, Rajesh Shankarrao, Irvine, 92618 (US); Katre, Prashant, Irvine, 92618 (US)
(74) Representative: Dilg, Haeusler, Schindelmann Patentanwaltsgesellschaft mbH

(56) References cited:
- WO-A1-2023/101712
- US-A1- 2024 155 699

## Description

### Field of the Disclosure

This disclosure generally relates to systems and methods for communication between network devices, such as communication between a Bluetooth peripheral device and a server.

### Background of the Disclosure

In the last few decades, the market for wireless communications devices has grown by orders of magnitude, fueled by the use of portable devices, and increased connectivity and data transfer between all manners of devices. Digital switching techniques have facilitated the large-scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), and code division multiple access (CDMA). As higher data throughput, density of networks, and other changes develop, increasingly latency-sensitive data is provided across various networks. Moreover, network density can include various network types which may implement separate stacks or be implemented on different hardware (e.g., chips or domains thereof, across chips, or across other modules and devices). Thus, network communication across protocols can incur latency both according to stacks of the various protocols as well as hardware communication (e.g., inter-chip communication). WO 2023/101712 A1 discloses an offload agent that alternates sending packets over Wi-Fi and Bluetooth BLE to avoid latency of a frequency band.

### Summary

A network architecture can include various sub-nets, which operate according to differing protocols. For example, a network architecture can include a Bluetooth network and a Wi-Fi network. One or more devices of the network may act as a gateway, implementing communications according to each of a Bluetooth interface and a Wi-Fi interface (among other wired or wireless communications channels). At least some data originating from the Bluetooth network may be communicated onward to the Wi-Fi network (or vice versa), as in the case of a packet received from a Bluetooth peripheral device related to an operation performed on a remote server. Accordingly, the gateway can receive a packet from the Bluetooth interface, retrieve data embedded in the packet (e.g., according to a Bluetooth driver), and repacketize the data, via an IP network stack for Wi-Fi. Such an operation can include latency incurring transfers, such as a chip-to-chip data transfer between an applications processor and a dual-mode wireless communications chip used to implement both of the Bluetooth and Wi-Fi protocols.

According to the present disclosure, an agent (sometimes referred to as a BQUICK agent) can establish an offload agent on the dual-mode wireless communications chip to bypass the applications processor. Such an offload agent can facilitate communications between the respective networks, absent the latency incurred via data transfers with the applications processor. The offload agent can implement all or a portion of functionality of a networking stack implemented by the applications processor. For example, the offload agent can generate Wi-Fi packets based on the receipt of a Bluetooth packet having a source, destination, or other attribute identified by the offload agent, bypassing the network stack of the applications processor, if not the applications processor entirely. Such an implementation may further reduce processor loading of the applications processor, and reduce total system power use, in addition to latency reductions, relative to other techniques. The invention is defined by the independent claims. Further embodiments of the invention are defined by the dependent claims.

### Brief Description of the Drawings

Various objects, aspects, features, and advantages of the disclosure will become more apparent and better understood by referring to the detailed description taken in conjunction with the accompanying drawings, in which reference characters identify corresponding elements throughout. In the drawings, like reference numbers generally indicate identical, functionally similar, and/or structurally similar elements.
FIG. 1A is a general schematic block diagram of a communication system according to some embodiments;
FIG. 1B is a general schematic block diagram of portion of the communication system illustrated in FIG. 1A according to some embodiments;
FIG. 1C is a general schematic block diagram of applications in communication with cloud infrastructure for the communication system illustrated in FIG. 1A according to some embodiments;
FIG. 1D is a general schematic block diagram of an application for a communication system illustrated in FIG. 1A according to some embodiments;
FIG. 1E is a general schematic block diagram of an application for a communication system illustrated in FIG. 1A according to some embodiments;
FIG. 1F is a schematic block diagram of the communication system illustrated in FIG. 1A including a server configured for augmented reality/virtual reality and/or metaverse applications according to some embodiments;
FIG. 2A is a block diagram of embodiments of a computing device; and
FIG. 2B is a block diagram depicting a computing environment comprising client device in communication with cloud service providers;
FIG. 3 is a network diagram for a system including a gateway device such as a set top box, according to some embodiments;
FIG. 4 is a block diagram for a gateway device such as the set top box of FIG. 3, according to some embodiments;
FIG. 5 is a sequence diagram of a method for offloading network processing for low latency network communications, according to some embodiments;
FIG. 6 is a flow diagram for a method of offloading network processing for low latency network communications, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are referred to by the present disclosure : IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of a time reference across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third-party Wi-Fi access point, a third-party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end-to-end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be, for instance, a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (such as video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet or data unit (e.g., network layer packets, cells, frames, etc., used in the transmission of data) to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicate across a device or a link. Monitoring or monitor refers to an action where performance is observed, checked, and/or recorded and can generally occur over a period of time.

A non-transitory computer readable medium has instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in paths associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level or a requirement of the application or use in some embodiments. A packet refers to a unit of data that is transmitted over a network in some embodiments, and includes cells, frames, and network layer packets, for instance. Packets can refer to datagrams, frames, or network layer packets, for instance. The packets can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of offloading network processing for low-latency network communication.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

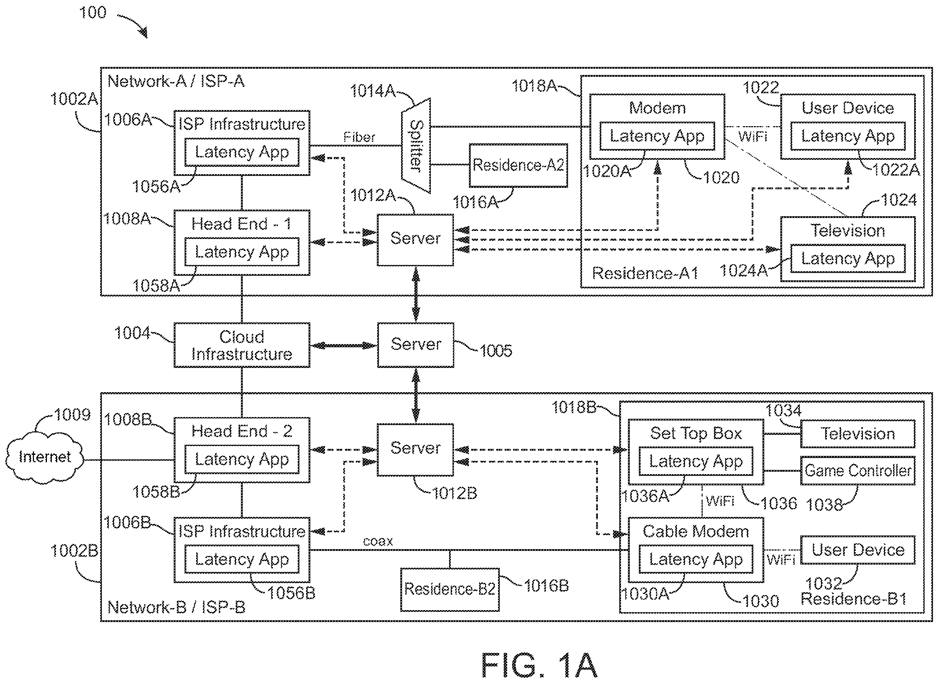

With reference to FIG. 1A, a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associated with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smartphone, AR/VR device, tablet, laptop computer, smartwatch, exercise equipment, smart appliance, camera, headphone, automobile, other computing device, etc. Residence 1016A can have similar devices to residence 1018A. Television 1024 and user device 1022 communicate with optical network unit 1020 via a wireless network or wired connections. In some embodiments, optical network unit 1020 can include an Ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 1014A is a conducting cable-type splitter (e.g., for a coaxial, not optical cable). Splitter 1014A includes repeaters, amplifiers, signal conditioners, etc. in some embodiments.

BQUICK ISP_A server 1012A is a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), a DNS (Domain Name System) server, a dynamic host configuration protocol (DHCP) server for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and can be configured to operate with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet, for instance, for internet connectivity. Each node (e.g., routers, repeaters, modems, Wi-Fi access points) inside the home can introduce latency. ONU 1020 and modem 1030 can be any device at a home or business that connects networking devices to ISPs via an internet data pipe over coaxial cable, fiber optic cable, digital subscriber line (DSL), or cell connection (e.g., via a tower (e.g., 5G, LTE modem)) in some embodiments.

Set top box 1036 is configured to receive and decode digital television, movie, streaming, or other video signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end to end combination of networking elements used for networking traffic from a home or business to internet 1009 (e.g., public internet) in some embodiments. In some embodiments, cloud infrastructure 1004 is a set multiple servers, switches, storage units. ISPs can have a pool of data centers/cloud servers co-located with head ends 1008A and 1008B or dedicated links to cloud infrastructure 1004 from head ends 1008A and 1008B and head end connections to the internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (e.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B are operated by ISP-A and ISP-B. ISPs extend their services to various residences or businesses within communities, cities, or specific regions. Networks 1002A and 1002B represent two distinct networks served by the same or different ISPs, which may be situated in the same neighborhood or entirely in different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 1056B for ISP infrastructure 106B, a head end BQUICK application 1058B associated with head end 1008B, a modem BQUICK application 1030B for modem 1030, and a set top box BQUICK application 1036B for set top box. Applications 1056B, 1058B, 1030B, and 1036B are similar to applications 1056A, 1058A, 1020A, 1022A, and 1024A. In some embodiments, when applications 1030B, 1036B, 1056A, 1056B, 1058B, 1058A, 1020A, 1022A, and 1024A are installed or associated devices join the network, the applications 1030B, 1036B, 1056A, 1056B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 1056B, 1058B, 1058A, 1020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 1056B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

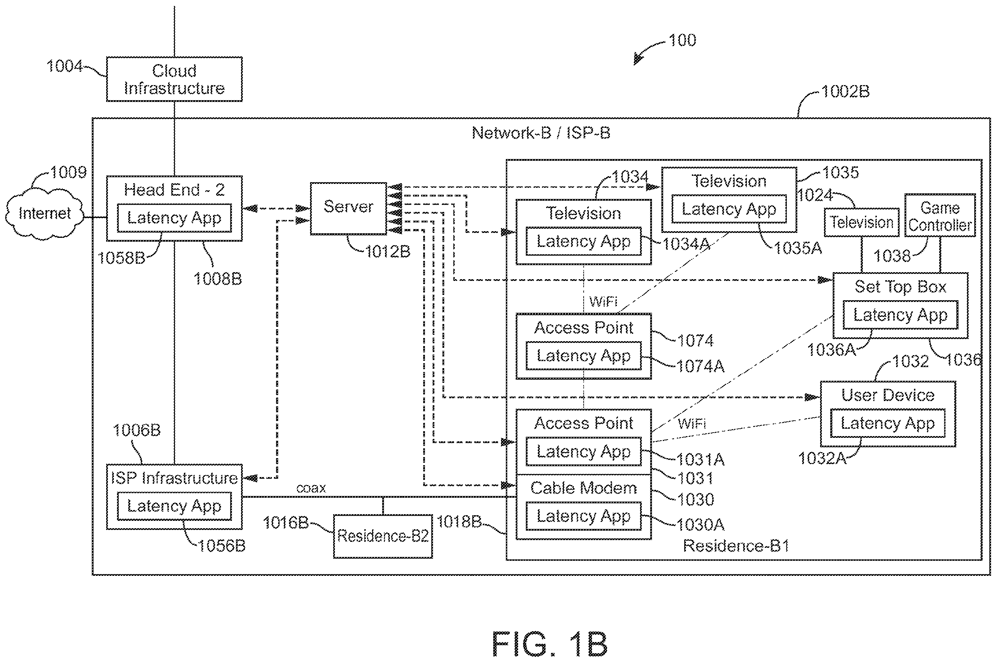

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 1056B, and 1058B in some embodiments. A server refers to any computing device that provides services or resources to other computers or clients within a network in some embodiments.

Applications 1030B, 1031B, 1036B, 1074B, 1032B, 1034B, 1035B, 1056B, and 1058B are similar to applications 1056A, 1058A, 1020A, 1022A, and 1024A. Applications 1030B, 1031B, 1036B, 1074B, 1032B, 1034B, 1035B, 1056B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 1056B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 1056B, and 1058B can include algorithms for changing packet priority with time and latency requirements. Applications 1030B, 1031B, 1036B, 1074B, 1032B, 1034B, 1035B, 1056B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 1056B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables integration and collaboration between different apps, allowing them to share information, trigger actions, or synchronize state without requiring user intervention in some embodiments. BQUICK _TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 1056B and 1058B in some embodiments. In some embodiments, the partitioning of applications 1056B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 1056B, 1058B, 1020A, 1024A, 1030B, 1032B, 1034B, 1035B, 1036B, 137A, and 1032B can achieve synchronization of the time reference across all nodes and end user devices. Applications 1056B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 1056B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

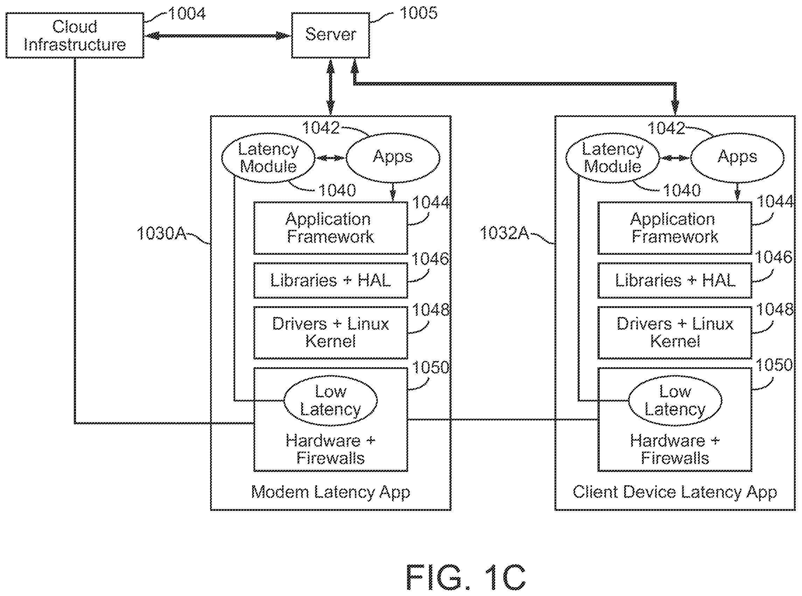

With reference to FIG. 1C, applications 1030B and 1032B each include a latency module 1040, applications 1042, an application framework 1044, libraries and hardware abstraction layer 1046, drivers and Linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third party apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

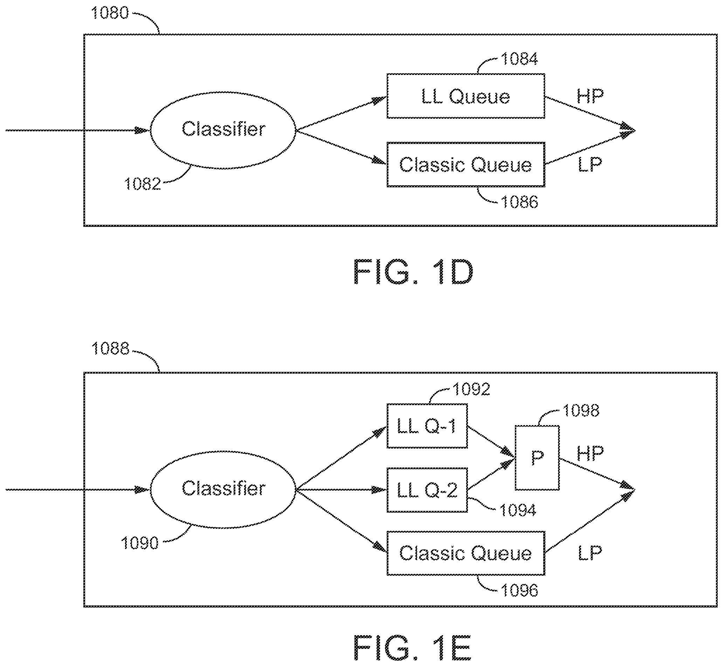

With reference to FIG. 1D, a function, service, process, or operation 1080 can be controlled by any of applications 1030B, 1031B, 1036B, 1074B, 1032B, 1034B, 1035B, 1056B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or logical constructs (e.g., implemented using data structures) used to manage the flow of packets or messages within a network device or system 100 (FIG. 1A). Queue 1084 is associated with a high performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 1056B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 1056B, 1058B, 1056A, 1058A, 1020A, 1022A, and 1024A. Operation 1088 is similar to operation 1080 and utilizes a classifier 1090, a first low latency queue 1092, a second low latency queue 1094, a classic queue 1096, and a priority queue 1098. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provides messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BQUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 1056B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust responses to the latency level at a particular time, for a particular time period, etc. Latency information can be communicated to servers 1012A, 1012B, and 1012 and applications 1030B, 1031B, 1036B, 1074B, 1032B, 1034B, 1035B, 1056B, 1058B, 1056A, 1058A, 1020A, 1022A, and 1024A as timestamps appended to packets as described herein, or to a packet identifier (e.g., 5 tuples and sequence number) in some embodiments. The time stamp information can be sent to servers 1012A, 1012B, and/or 1012 via an independent virtual/logical channel in some embodiments.

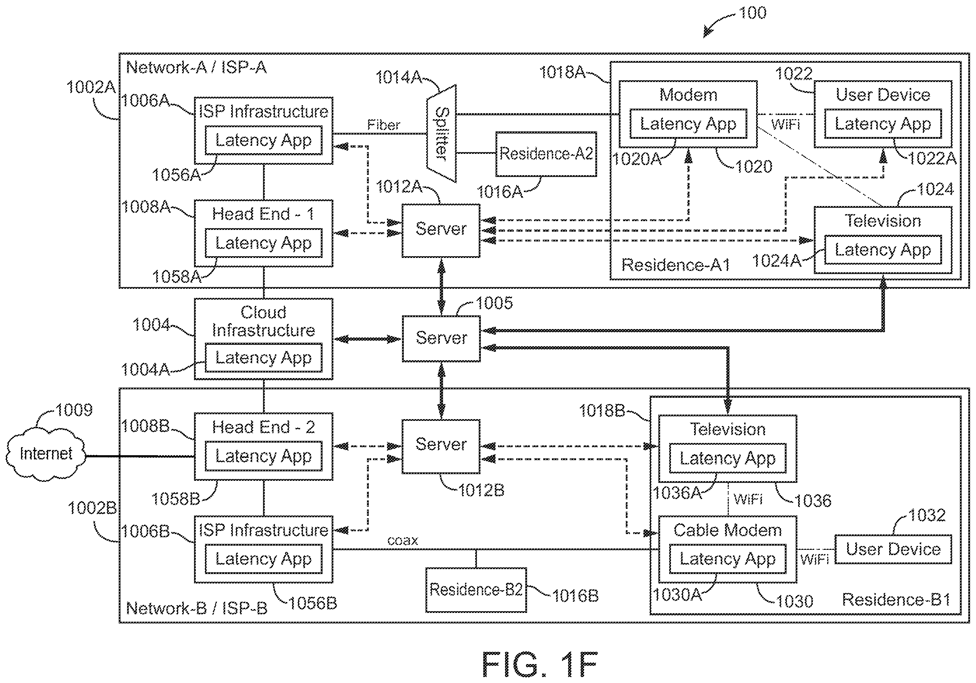

With reference to FIG. 1F, cloud infrastructure 1004 can include an application 1004A. Application 1004A is similar to applications 1030B, 1031B, 1036B, 1074B 1032B, 1034B, 1035B, 1056B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

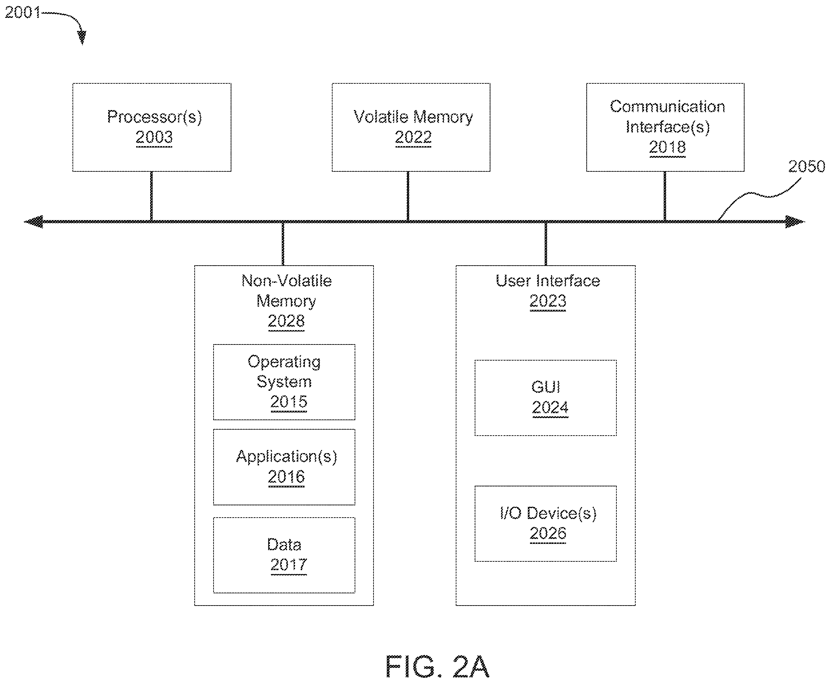

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, a remote control, a video game controller, or joystick, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001, as shown in FIG. 2A, is shown merely as an example. Clients, servers, intermediary devices, and other networking devices may be implemented by any computing or processing environment and with any type of machine or set of machines that may have suitable hardware and/or software capable of operating, as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

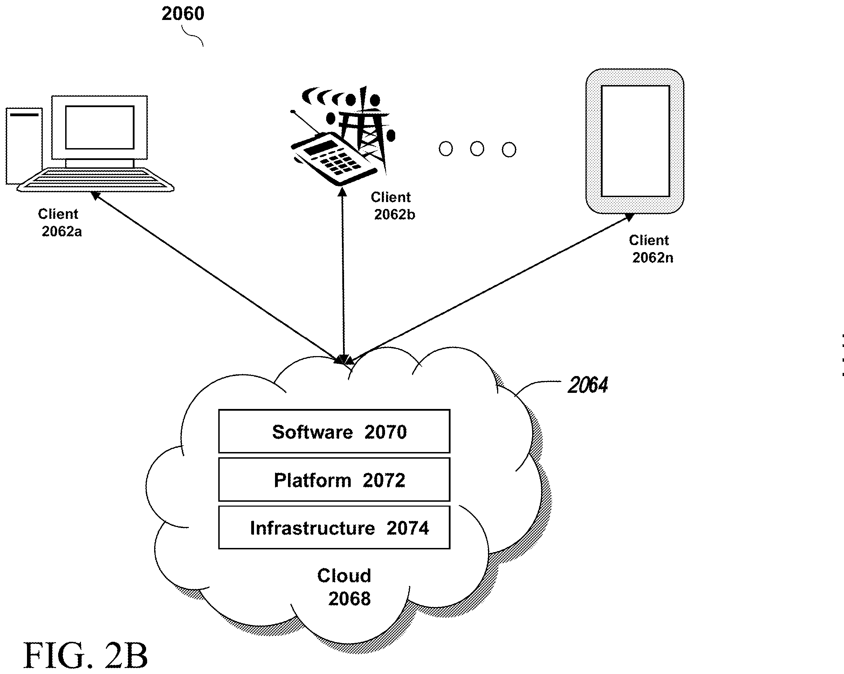

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but are not limited to, networks, network bandwidth, servers, processing, memory, storage, applications, virtual machines, databases, software, hardware, analytics, and intelligence.

In some embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In some embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include infrastructure as a service (IaaS). The computing environment 2060 can include platform as a service (PaaS). The computing environment 2060 can include serverless computing. The computing environment 2060 can include software as a service (SaaS). For example, the cloud 2068 may also include a cloud based delivery, e.g., software as a service (SaaS) 2070, platform as a service (PaaS) 2072, and infrastructure as a service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, google compute engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use various wireless communication devices. For example, multiple-unit communication interfaces associated with cellular networks, satellite communications, vehicle communication networks, wired networks, and networks can utilize the systems and methods described herein without departing from the scope of the systems and methods described herein.

### D. Offloading Network Processing

Below are detailed descriptions of various concepts related to, and embodiments of, techniques, approaches, methods, apparatuses, and systems for offloading network processing for low-latency network communications. The various concepts introduced above and discussed in greater detail below may be implemented in any of numerous ways, as the described concepts are not limited to any particular manner of implementation. Examples of specific embodiments and applications are provided primarily for illustrative purposes.

Disclosed herein are systems and methods of offloading network processing for low-latency network communications. For example, a multi-domain device can include a first domain including an applications processor and a second domain including a wireless communications chip. The application processor can interface with an application executed (at least in part) at a remote server. The wireless communications chip can route at least a portion of traffic received at a first interface of the wireless communications chip to a second interface of the wireless communications chip. For example, an agent on the applications processor can establish an offload agent on the wireless communications chip, including instructions to (1) identify all or some data received at the first interface, and (2) generate packets including the data for communication from the second interface. For example, the agent can be an a BQUICK agent to aid in the reduction of latency for the application executed (at least in part) at the remote server. The offload agent can identify Bluetooth packets related to the application executed on the remote server, and generate Wi-Fi packets including the received data for transmission to the server. For example, the remote server can render, stream, or otherwise execute a videogame displayed proximal to a device including the applications processor and wireless communications chip (e.g., a set top box); the Bluetooth packets may be received from a video game controller proximal to, and paired with, the set top box or other device.

For clarity of the disclosure, before proceeding with further description of the systems and methods provided herein, illustrative descriptions of various terms are provided:

An agent may refer to or include a hardware or software component that performs tasks on behalf of a user or another program (e.g., on behalf of a BQUICK server, such as the BQUICK_TOP server 1005), in some embodiments. For example, the agent can automate repetitive tasks or manage system operations autonomously or semi-autonomously, limiting communications traffic incurred by a BQUICK server or other device instantiating, controlling, or otherwise associated with the agent. An offload agent may refer to or include a hardware or software component that performs tasks on behalf of the agent, in some embodiments. For example, an offload agent can route packets according to information (e.g., instructions or state information) received from an agent. Establishing the offload agent may refer to or include the process of setting up or initiating the offload agent, in some embodiments. For example, establishing the offload agent can include any of instantiating the offload agent, providing configuration information to the offload agent, or commanding an offload agent to begin operation. The establishment of the offload agent can further include operations performed by the offload agent, such as setting up a second network stack to model another network stack.

A system on Chip (SoC) may refer to or include an integrated circuit that consolidates components of a computer or other electronic system into a single chip or multichip package, in some embodiments. For example, an SoC might contain a CPU, memory, input/output ports, and secondary storage on one chip. Some systems can include multiple SoCs. For example, one SoC can host an applications processor and a second SoC can implement various interfaces. For example, a serial SoC can provide access to CAN, 232, USB, or other serial links and a wireless SoC can provide Bluetooth, Wi-Fi, or other wireless links. Each SoC can include one or more processors. A processor may refer to or include control circuity configured to execute instructions or otherwise process, send, or receive data, in some embodiments. For example, a processor can include dedicated hardware circuits to perform a predefined function, or a general-purpose processor configured to execute instructions to cause the processor to perform any of various functions.

A Bluetooth (BT) controller may refer to or include a central or peripheral device providing Bluetooth wireless communication, in some embodiments. For example, a Bluetooth controller can include a remote control, a video game controller, or an annotation pointer for a teleconference. A BT controller can pair with another BT device, such as a television, desktop computer, set top box, or so forth. Pairing can refer to or include the linking or connection of two devices or components for communication, in some embodiments. For example, paired Bluetooth devices can exchange data wirelessly to establish the pair, and may communicate further packets once so paired.

A network stack may refer to or include a set of components (e.g., software components, processes, drivers, buffers, files, memory, etc.) that implement the various protocols used to facilitate network communications and data exchange over a network, in some embodiments. These components can be organized in a hierarchical manner, reflecting the layered architecture of networking models such as the OSI (Open Systems Interconnection) model. For example, the layers can include a data link layer, having a MAC sublayer disposed over a physical layer. Information about the network stack may refer to or include details regarding the configuration, status, and performance of the network protocol layers, in some embodiments. For example, information about the network stack can include Tuple information, sequence numbers, IP addresses, routing tables, or connection statuses. A state of the network stack may refer to or include the current status or condition of the network or protocol layers and their operations, in some embodiments. For example, the state of the network stack can indicate active connections, data transfer rates, and error rates.

A transfer of the state of the network stack may refer to or include the process of moving the current status or condition of a network stack from one component to another, in some embodiments. For example, the transfer of the state can transfer the state of the network stack from one SoC to another SoC. The state can include, for example, sequence numbers, Tuple information, connection state information, buffer contents, timers, control registers, or other network stack information so that a second network stack can emulate or form a copy of the transferred network stack to communicate with a server. The transfer can be from a full network stack to a reduced functionality or other modeled network stack. Bypassing the network stack may refer to or include the act of circumventing certain layers or components within the network stack to achieve direct communication or faster data transfer, in some embodiments. For example, bypassing the network stack can be used to reduce latency in high-speed data transmissions by avoiding unnecessary processing steps. Bypassing the network stack can include routing packets through a second network stack, separate from the bypassed network stack, in some embodiments.

A packet may refer to or include a formatted unit of data carried by a packet-switched network, in some embodiments. For example, a packet typically contains control information and user data, such as headers and payloads. A packet can refer to, for example, a Bluetooth packet, a Wi-Fi packet, or other packet, or an intermediate format as processed by any component along a dataflow therefor. Packet generation may refer to or include the process of creating data packets for transmission over a network, in some embodiments. For example, generating packets can involve encapsulating user data with headers or addressing information. In some embodiments, the generated packets may be a reformatting of one packet type (e.g., a Bluetooth packet) to another packet type (e.g., a Wi-Fi packet).

Prioritizing a packet may refer to or include the act selecting one packet for transmission or processing in advance of or over or before another packet, in some embodiments. Prioritizing network traffic can ensure more critical, latency sensitive or higher priority data is transmitted before less important or less latency sensitive data. For example, traffic may be prioritized according to a packet size, packet type, source address, destination address, or payload contents. In some embodiments, a packet is prioritized according to a selected queue.

A loss of a packet may refer to or include a packet that is sent, but is not received by a destination, in some embodiments. Packet loss can be detected according to a sequence number, a lack of an acknowledgement (ACK), a receipt of a non-acknowledgement (NACK), etc. The indication can be received according to any layer of an OSI model. For example, the detection may be at the transport layer, a layer above the transport layer (e.g., from the application layer based on application data), or a layer below the transport layer.

Re-transmission may refer to or include a re-sending of a packet previously sent, such as transmission of a packet having a same payload as a packet which is detected as lost, dropped or otherwise not received according to some embodiments. The re-transmission can be performed by a same device as an original transmission, or another device. The packet prepared for transmission can be a bit-wise equivalent of a lost packet, or can include adjustments to, for example, a sequence number, timestamp, or header information, along with an error correction code, to correspond to any other adjustments.

An application may refer to or include a set of instructions configured to carry output a specific task, in some embodiments. For example, applications include a gaming applications to render video games, streaming applications to stream video, or another applications. Some applications include display outputs. Some applications may operate according to various networked computing devices. For example, a video game or teleconference application may be instantiated according to an application including components at a server, a set top box, and a Bluetooth controller. An application may operate at a layer above the data link or transport layer (e.g., on an applications processor). Applications may sometimes be referred to as computer programs of software, such as the example of the various instances of SaaS 2070.

A server may refer to or include a computing system to provide resources, data, services, or programs to other computers (e.g., client devices), according to some embodiments. For example, the server can be a latency server (e.g., a BQUICK_TOP server 1005) in some embodiments, or any other server of FIGS. 1A-1E. A server can execute an application in conjunction with, or based on communication with another processor, such as an applications processor of a set top box (STB). A server can communicate with various client devices disposed on various networks (e.g., local networks). A server can communicate with the client devices via any number of further devices, such as other servers. For example, a server can connect through a content delivery network (CDN) device, an internet service provider, or a peering arrangement with other networks to distribute resources to client devices. A device may refer to or include a piece of hardware or equipment designed for a particular purpose, in some embodiments. For example, a device can be a smartphone, computer, set top box, television, or any electronic gadget.

Wireless communication or connections may refer to or include the transfer of information between two or more devices other than by an electrical conductor, in some embodiments. It can involve the use of electromagnetic waves, such as radio frequencies, infrared, and microwaves, to transmit data through the air, allowing devices to communicate over without wires, cables, or other physical connections (although in some cases, such physical connections may be present, such as for power delivery). For example, Wi-Fi is a technology that allows electronic devices to connect to a wireless local area network (WLAN), typically using, for example, 2.4 GHz, 5 GHz, or 6 GHz radio bands. Bluetooth is a technology that allows electronic devices to connect to an ad-hoc or other network along a same or similar radio bands as Wi-Fi; many devices implement both Bluetooth and Wi-Fi communications, such as by sharing a same chip, transceiver, antennae, or other component.

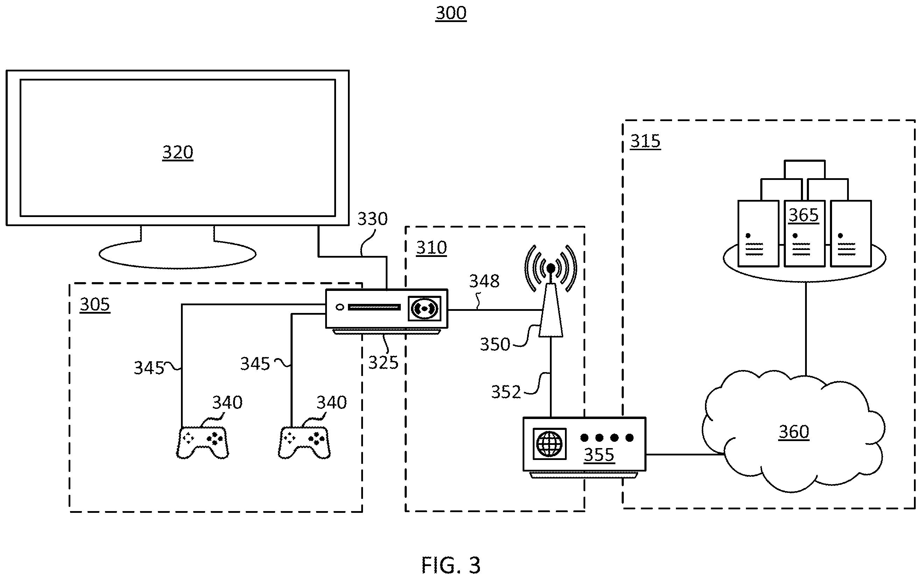

With reference to FIG. 3, a network diagram 300 of a system including a gateway device such as a set top box to offload network processing for low latency network communication, according to some embodiments. The network diagram 300 includes each of a first domain 305, second domain 310, and third domain 315. The respective domains may correspond to separate communications subnets of a network, which are implemented via distinct hardware or software components, including a software stack spanning one or more logical layers (e.g., layers of the Open Systems Interconnection (OSI) model). For example, the various subnets may be implemented according to varying protocols or configurations.

The set top box (STB) 325 or other components can include one or more agents (e.g., BQUICK agents in communication with a BQUICK_TOP server 1005). For example, an agent residing on the STB 325 can establish another network stack (e.g., a modeled stack) on the gateway device 355 (e.g., an access point 1031 or cable modem). The network stack on the gateway device 355 can handle retransmission of packets with one or more servers, such as server 365. For example, the agent can establish a transport layer connection with the server 365 over the gateway device 355, establish a pipe with the gateway device 355 (e.g., at the data link layer), and communicate, to the network gateway via the pipe, a copy of a buffer for a socket used for the transport layer connection. Accordingly, the gateway device can detect dropped packets between the STB 325 and the gateway device 355 according to a detection of data in the pipe which does not correspond to a received packet and cause a retransmission of the dropped packet.

In some embodiments, the first domain 305 may refer to a Bluetooth-connected portion of the network diagram 300 and the second domain 310 may refer to a wireless fidelity (Wi-Fi) connected portion of the network diagram 300. A same transceiver, chip, module, or other component can be used to implement the Wi-Fi and Bluetooth communications. Such a component, sometimes referred to as a multi-mode chip (e.g., dual-mode chip), can aid in interference management and reduce design complexity, relative to other implementations. For ease of reference and depiction, the first domain 305 will sometimes be referred to as a Bluetooth network 305 and the second domain 310 will sometimes be referred to as a Wi-Fi network 310, to accord with this example. However, such an implementation should not be construed as limiting. In some examples, the techniques of the present disclosure can be applied to other protocols including wireless protocols such as a Zigbee and Thread communications, Bluetooth and near-field communications (NFC), or wired protocols such as Ethernet and USB. The third domain 315 may refer to a broadband access portion of the network diagram 300 to connect the Bluetooth network 305 or Wi-Fi network 310 to a server 365 remote therefrom. The broadband access portion of the network can include, for example, a Cable-Modem Termination Services (CMTS), Ethernet connections, fiber optics, cellular links, or satellite communications.

The network diagram 300 further includes a display 320 which may be configured to display audio or visual content such as video streams, video games, teleconferences, or other latency-sensitive information. Latency sensitive information can refer to or include information which, if delayed, can impact a functionality of a client device as perceptible to a user. Content (e.g., audio content or video content) provided for the display 320 may be rendered, communicated, or otherwise generated remote from the display 320. For example, an application hosted at a remote server 365 can render graphics for a video game or other content and provide a video output of the rendered graphics to the display 320 for presentation. A user can interface with the presented video output via a control interface such as a handheld video game controller 340. At least a portion of data (e.g., controller inputs) received from a Bluetooth Controller such as the depicted handheld video game controller 340 may be latency sensitive. For example, when playing a video game, latency incurred between entering a command and seeing a result may be visually jarring, and may inject lag, affecting interactions between video game avatars, which can include either of avatars of further users, or non-playable characters. The example of a video game should not be construed as limiting. In some embodiments, the systems and methods of the present disclosure can operate with regard to a presentation controller for a video conference, or another control input configured to interface with latency-sensitive content.

The handheld video game controller 340 can include various buttons or other controls to receive control inputs to access menus, control gameplay elements, or otherwise modulate content displayed via the display 320. At least a portion of such control inputs are relevant to a remote server 365. For example, a directional control input controlling a selected view of a playable character in a video game may be received by the remote server 365 to render graphics according to the selected view. Such control inputs can be communicated to the server 365 according to a Bluetooth link 345 of the Bluetooth network 305. The control input can be received, at the STB 325, by a processor interfacing with a Bluetooth transceiver, passed to another processor of the STB 325 (e.g., an applications processor), and then be communicated to a processor interfacing with a Wi-Fi transceiver of the STB 325 for communication onward (e.g., via a Wi-Fi link 348 of a Wi-Fi network). In some devices, the Wi-fi and Bluetooth processors or transceivers may be implemented on a same chip (or portion thereof) or otherwise be proximal to each other. Accordingly, a communications pathway between the Bluetooth and Wi-Fi transceivers which bypasses another component (e.g., the applications processor) can lower communications latency between the handheld video game controller 340 and the server 365. Such a reduction may, in turn, reduce total lag between a receipt of an input by the handheld video game controller 340 and a presentation of corresponding content via the display 320.

In some embodiments, a portion of the various interfaces may not be relevant to latency-sensitive operations of the remote sever 365 (or may not be relevant to the sever 365 at all). For example, the various interfaces can include a volume control for a volume adjustment executed locally at the display 320 or the STB 325. The STB 325 can identify these control inputs upon their receipt and provide them to an applications processor of the STB (e.g., instead of providing them to a Wi-Fi processor for communication to the server 365).

The Bluetooth network 305 can include any number of Bluetooth peripheral devices coupled with and configured to exchange (e.g., provide or receive) data with a host, which may be referred to as a Central device. For example, a set top box 325 for a display 320 can implement a Central device of the Bluetooth network to couple with (and receive inputs from) various Bluetooth controllers, such as handheld video game controller 340, remote controllers for selection of video content, smart home devices, headsets or other audio devices, or fitness trackers used in combination with the display 320. In some embodiments, the Bluetooth network 305 can include the display 320 or portions thereof (e.g., a video portion or audio portion, such as a Bluetooth-connected speaker). In some embodiments, the STB 325 can connect with the display 320 via a separate display-link 330 (e.g., High-Definition Multimedia Interface (HDMI), universal serial bus (USB), or DisplayLink).

Distal to the Wi-Fi link 348 (relative to the Bluetooth network 305), a communications pathway to the server can further include other network components, such as a Wi-Fi AP device 350 coupled with a cable modem or other gateway device 355 via a further link (e.g., ethernet link 352). The gateway device 355 can couple with the server 365 via a network 360 of the third domain 315.

The various devices and links of the second 310 and third domain 315 can contribute latency to any communication between the Wi-Fi link 348 and the server 365, such that additional latency incurred at the STB 325 can negatively impact a user experience. For example, where a first twenty milliseconds of latency may not be perceptible to a particular user, such a latency-budget may be exhausted (or nearly so) such that any latency incurred at the STB 325 may become perceptible or otherwise impair a user experience or performance. The network 360 of the third domain 315 (like the first 305 and second 310) can be or overlap with one or more BQUICK components, such as the BQUICK_TOP server 1005. That is, networks 1002A and 1002B can include at least a portion of any of the first (e.g., Bluetooth) domain 305, second (e.g., Wi-Fi) domain 310, and third domain 315. Accordingly, the BQUICK_TOP server 1005 can manage latency between various of the devices of the network architecture 300.

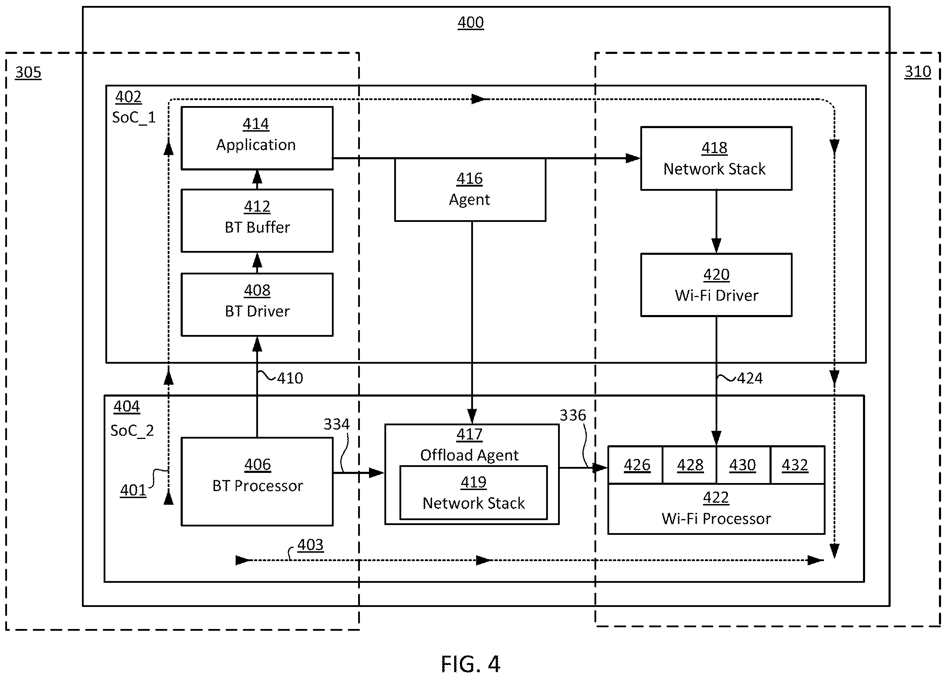

With reference to FIG. 4, a block diagram of a device 400, such as the set top box (STB) 325 of FIG. 3. is provided, according to some embodiments. The device 400 can be disposed in a network environment as is depicted by the network diagram 300 of FIG. 3. The device 400 can include a Bluetooth circuit to interface with the Bluetooth network 305, and Wi-Fi circuit to interface with a Wi-Fi network 310.

The device 400 includes a first SoC 402, such as an application processor configured to interface with the server 365 to provide content to the display 320. The first SoC 402 can interface with the second SoC 404 according to various hardware or software components. For example, the first SoC 402 can instantiate drivers, buffers, or other components to communicate with the Bluetooth or Wi-Fi circuits, as well as other interfaces of the device 400 (e.g., USB, HDMI, or Ethernet). One or more microprocessors or other control circuity of the first SoC 402 can be referred to, collectively, as a processor of the SoC 402. References to the first SoC 402 and second SoC 404 should not be understood to limit the present disclosure. For example, in some embodiments, the functions of the first SoC 402 and second SoC 404 may be implemented in different domains of a same chip (e.g., as connected via an AXI interface) wherein the application of the techniques of the present disclosure can reduce latency or power use associated with cross-domain intra-chip communication.

The device 400 includes a second SoC 404 implementing communications protocols. For example, the second SoC 404 can include circuits implementing various wired or wireless communications protocols. With more specific reference to the depicted illustrative example, the second SoC 404 can include circuits implementing Bluetooth and Wi-Fi communications.

The Bluetooth circuit can include a Bluetooth transceiver, buffers, and control circuity therefor. Such control circuity can be referred to as a Bluetooth processor 406, as may be implemented by processing circuity of a processor coupled with memory to execute instructions stored therein, or another interface controller (e.g., hardware pipeline). The Wi-Fi circuit can, likewise, include a Wi-Fi transceiver, buffers, and control circuity. The control circuity can be referred to as a Wi-Fi processor 422. In some embodiments, the Bluetooth circuit and Wi-Fi circuit share one or more transceivers, processors, buffers, or other components. For example, the Bluetooth processor 406 and Wi-Fi processor 422 can share one or more components, and may be referred to, collectively, as a processor of the second SoC 404.

The device 400 can receive Bluetooth packets from various Bluetooth devices. For example, the device 400 can receive packets including latency-sensitive control inputs from a peripheral device such as a handheld video game controller 340. While some packets may be locally processed at the first SoC 402 without retransmission to the server 365, other packets may be communicated to a remote server 365, such that the first SoC 402 operates to route communication between the Bluetooth interface (e.g., the Bluetooth processor 406) and the Wi-Fi interface (e.g., the Wi-Fi processor 422). A first data flow 401 depicts one illustrative packet flow flowing to the Wi-Fi processor 422 for transmission onwards to the server 365. References to the packet in the first data flow 401 (and the second data flow 403, hereinafter) refer to a provision of at least a portion of data embedded in the packet, such as a control input. For example, the first SoC 402 or the second SoC 404 can strip or append header data and padding, or transform data between formats or types along each of the data flows 401, 403.

The first data flow 401 includes a receipt, by the Bluetooth processor 406, of a packet including data. The Bluetooth processor 406 can communicate the packet to a Bluetooth driver 408 instantiated on the first SoC 402. For example, the chip-to-chip communication can be realized by a first inter-chip link 410, such as a universal (a)synchronous receiver or transmitter (UART), or another interface. The BT driver 408 can place the packet into queue for an application 414 at a BT buffer 412. Upon accessing the packet, the application 414 can communicate the packet to a network stack 418 for the Wi-Fi processor 422. The network stack 418 can span various functional layers (e.g., layers of the OSI model). For example, the network stack 418 can receive the packet from the application 414 (at the application-level) and provide the packet to a Wi-Fi driver 420 operating at a data link level.

The Wi-Fi driver 420 can communicate the packet over a second inter-chip link 424 (e.g., one or more input locations therefor). In some embodiments, the second inter-chip link 424 can share a same medium as the first inter-chip link 410, such as where the second inter-chip link 424 and first inter-chip link 410 are an uplink/downlink pair of a duplex link. In some embodiments, the second inter-chip link 424 is implemented as a different channel as the first inter-chip link 410. For example, where the first inter-chip link 410 is implemented as a UART or I2C link to communicate with the BT processor 406, the second inter-chip link 424 can include a PCIe or USB channel to communicate with the Wi-Fi processor 422. Referring again to the input locations for the Wi-Fi processor 422, the Wi-Fi processor 422 can include or interface with multiple queues, registers, or other inputs configured to receive data. Such queues, registers, or other inputs can correspond to varying priorities, application types, or other subdivisions. For example, and with further reference to the example of a PCIe link for the second inter-chip link 424, the input locations can correspond to an addressable portion of the PCIe memory map associated with packet priority. The Wi-Fi driver 420 can store packets in a location according to a priority or another criterion, such as a source application. The Wi-Fi processor 422 can select from the memory locations according to a priority thereof. For example, the Wi-Fi processor 422 can preferentially process a first priority buffer 426 before a second priority buffer 428, the second priority buffer 428 before a third priority buffer 430, and the third priority buffer 430 before a fourth priority buffer 432.

An agent 416 residing on the device 400 (e.g., on the first SoC 402) can configure data flows of the device 400. The agent 416 can establish an offload agent 417 to offload the network stack 418. For example, the offload agent 417 can implement a second network stack 419 on the second SoC 404, separate from the network stack 418 of the first SoC 402. The offload agent 417 can cause packets to bypass the network stack 418, bypassing the first SoC 402 according to a transfer from the Bluetooth circuit (e.g., the Bluetooth processor 406) to the Wi-Fi circuit (e.g., the Wi-Fi processor 422). For example, the offload agent 417 may be implemented by one or more of the Bluetooth processor 406 and Wi-Fi processor 422. Communication between the Bluetooth processor 406 and Wi-Fi processor 422 can include an on-chip path including at least one of a first intra-chip link 334 between a Bluetooth processor 406 and the offload agent 417 (e.g., a second network stack 419 thereof) or a second intra-chip link 334 between the offload agent 417 and the Wi-Fi Processor 422. In some embodiments, the agent 416 may be a BQUICK agent. For example, the agent 416 can operate based on communication with a BQUICK_TOP server 1005, wherein the BQUICK_TOP server 1005 configures flows in in the device 400 network according to controls implemented in the device 400 to aid the data flowing therethrough to meet low latency requirements (e.g., the STB 325 or other device 400 can be a device of networks 1002A and 1002B).

The agent 416 can identify that a Bluetooth controller (e.g., a peripheral device) is being used with a device 400 (e.g., the STB 325). For example, the agent 416 can identify a hardware identifier, destination address, or payload content associated with the Bluetooth controller. The Bluetooth controller (e.g., the handheld video game controller 340) can provide data to the device 400 via a processor of the second SoC 404. The input can be an input for a video game or other application being communicated to the device from a server 365 via a network stack of the first SoC 402 (e.g., a processor thereof). The video game or other application may be displayed by the first SoC 402 (e.g., the processor thereof), via a display 320 coupled with the device 400. For example, the display 320 can be connected via an internet protocol (IP) connection or another connection, such as via the display-link 330 of FIG. 3. In some embodiments, the agent 416 can detect the usage of the Bluetooth controller by monitoring dataflow along the first data flow 401 (e.g., between the application 414 and the network stack). For example, in some embodiments, the application 414 (or another component, such as a driver) can be configured to alert the agent 416 upon data associated with a particular application, a particular destination (e.g., the server 365), or a receipt from a particular device. In some embodiments, the agent 416 is configured to monitor communications (e.g., by monitoring Tuple information for a list of predefined destination addresses, performing deep packet inspection to determine content of the packets, or so forth).

In some embodiments, the agent 416 can detect that the Bluetooth controller has been paired with the device 400. For example, the agent 416 can monitor a data flow including traffic indicative of pairing information, or an application or other component can be configured to indicate, to the agent 416, upon a pairing of a particular device or device type (e.g., according to a provision of a unique or other identifier, such as a Bluetooth device address).

The agent 416 can establish an offload agent 417 on the second SoC 404 (e.g., a processor thereof), responsive to the identification. The offload agent 417 can route data received via BT by the second SoC 404 from the BT controller to the offload agent. Such routing can communicate, by a processor of the second SoC 404 to the server 365 via Wi-Fi, bypassing the network stack 418 of the first SoC 402. For example, offload agent 417 can cause a processor of the second SoC 404 to communicate, via Wi-Fi, data received from the BT controller via a second network stack 419 instead of communicating the data to a processor of the first SoC 402. To establish the offload agent 417, the agent 416 can provide information about the network stack 418 of a processor of the first SoC 402 to a processor of the second SoC 404. For example, the agent 416 can provide the information via one of the first inter-chip link 410, the second inter-chip link 424, or a link separate from the first inter-chip link 410 and the second inter-chip link 424. The offload agent 417 can establish or operate a second network stack 419 on the second SoC 404 based on the information received from the agent 416.

The second network stack 419 can be implemented as a full stack or a modeled stack. A modeled stack can include simplified mechanisms for data segmentation and reassembly, basic error detection and correction, or a subset of flow control/congestion avoidance operations. The modeled stack might also incorporate custom lightweight versions of standard protocols, designed to operate transparently with other endpoints. The offload agent 417 can use information about the network stack 418 to generate packets for communicating with the server 365. For example, the modeled stack can be configured to receive a packet in a first format (e.g., a Bluetooth packet), generate an instance of the packet formatted according to a second format (e.g., a Wi-Fi packet), and provide the packet to a destination indicated in the received packet, or a predefined location received from the agent 416 (e.g., to the Wi-Fi-processor for communication with the server 365).

In some embodiments, the agent 416 provides a transfer of a state of the network stack 418 to the offload agent 417 to establish the offload agent 417. The offload agent 417 can implement the second network stack 419 using the state information. For example, the offload agent 417 can implement the second network stack 419 using sequence numbers, Tuple information (e.g., a 5-tuple of source IP, source port, destination IP, destination port, protocol or subsets thereof), connection state information (e.g., SYN_SENT, ESTABLISHED, or FIN_WAIT values for one or more connections), buffer contents, timers, control registers, and so forth. In some embodiments, the offload agent 417 duplicates the state of the network stack 418 in the second network stack 419 so as to operate transparently to devices in a communications path to the server 365.

A processor of the second SoC 404 can communicate one or more packets including the input received from the BT controller to the server 365 along the second data flow 403 bypassing the network stack 418 and other components of the first SoC 402. For example, the communicated packets can include packets generated by the processor of the second SoC 404 (e.g., by the second network stack 419). In some embodiments, the second SoC 404 prioritizes packets including the inputs (e.g., commands) from the BT controller. For example, the offload agent 417 can attach to a first priority buffer 426 of the Wi-Fi processor 422, such that the Wi-Fi processor 422 preferentially communicates Bluetooth data, relative to other data (e.g., packets received from the Wi-Fi driver 420 via lower priority buffers).

In some instances, the relatively low bandwidth of prioritized Bluetooth packets may not substantially impact dataflow of other Wi-Fi data, such that the prioritization of the Bluetooth packets may be transparent to the first SoC 402. In some embodiments, the offload agent 417 can only prioritize a subset of received packets. For example, the offload agent 417 can interface with multiple priority queues bypassing the network stack 418, or can selectively bypass the network stack 418 according to content of a received packet. For example, the selective operation may be according to instructions received from the agent 416 (which may, in turn, depend upon determinations of the BQUICK_TOP 1005 server). Accordingly, packets which are relevant to (e.g., processed by) a local application 414 of the first SoC 402, or packets which are not relevant to the local application, but which are not latency sensitive may not bypass the network stack 418 (e.g., may follow a path of the first data flow 401). For example, a Bluetooth processor 406 or other processor of the second SoC 404 can classify an input in the data received from the Bluetooth controller. Responsive to a classification according to a first type, the processor can cause the bypass of the network stack 418 (e.g., by passing the packet to the offload agent 417, and not to the BT driver 408. Responsive to a classification according to a second type, the processor can communicate the packet to the network stack 418 (e.g., to the BT driver 408 and not to the offload agent 417). According to further classifications, the processor could provide the packet to both of the offload agent 417 and the Bluetooth driver 408 or neither of the offload agent 417 or the Bluetooth driver 408.

The depicted illustrative examples of the first data flow 401 and second data flow 403 should not be construed as limiting. Some embodiments of the present disclosure can implement various further data flows. For example, in some embodiments, the agent 416 operates as or instantiates a separate offload agent 417 implementing the second network stack 419 on a same SoC (e.g., on the first SoC 402). Such an implementation may incur latency associated with the first inter-chip link 410 and second inter-chip link 424. However, further latency associated with the Bluetooth buffer 412, application 414, or first network stack 418 can be obviated according to such an approach. Further, such an approach may be implemented transparently to the second SoC 404, as may be useful in retrofit application, where it may be challenging to update microcode of the second SoC 404, where the second SoC 404 is compute-constrained, or so forth.

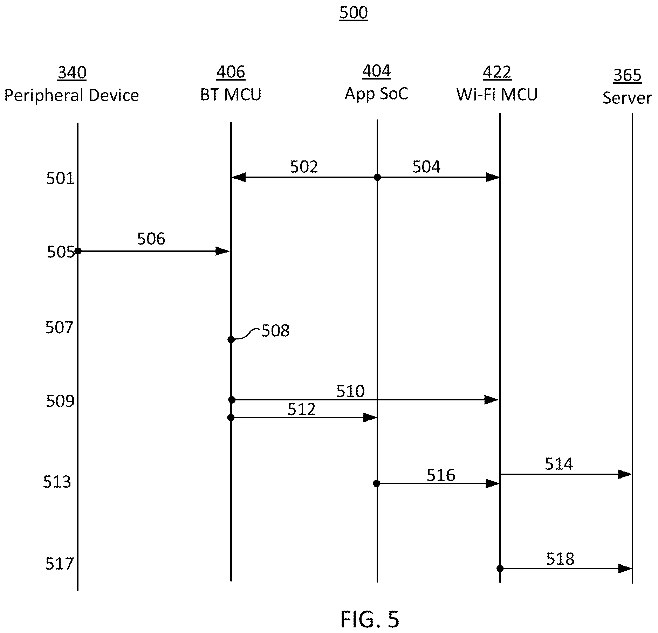

FIG. 5 is a sequence diagram for a method 500 of offloading network processing for low-latency network communication, according to some embodiments. The provided method includes a communication of data along each of a first data flow 401 and second data flow 403. However, in some instances, the method 500 may be practiced according to only one flow path (e.g., particular data may be communicated along only one of the first data flow 401 or the second data flow 403). Indeed, more generally, operations provided herein may be employed in combination or individually. That is, according to various embodiments, the depicted operations may be employed with (or without) each other, with (or without) other operations disclosed herein, or with (or without) further operations employed in wireless networks generally.

The depiction of the devices executing the operations on the sequence diagram is merely intended to provide an illustrative example. The method 500 can be performed with further devices or different network types, according to some embodiments. For example, in some embodiments, the method 500 can be performed with respect to wired communications protocols, between multiple domains of a same chip, or between separate devices.

At operation 501, an agent 416 on an applications processor (e.g., one or more processors of the first SoC 402 of FIG. 4) establishes an offload agent 417. For example, the applications processor can implement the offload agent 417 via one or more processors of a wireless communications interface, depicted as a Bluetooth processor 406 and a Wi-Fi processor 422 in FIG. 4, but which can include a same processor or other control circuity, in some embodiments. The offload agent 417 is configured to bypass a network stack of the applications processor. The establishment of the offload agent 417 can incldue a first communication 502 with the Bluetooth processor 406 (e.g., to provide instructions to classify packets) and a second communication 504 with the Wi-Fi processor (e.g., to attach to a queue).

The offload agent 417, according to various embodiments, can bypass a network stack of the applications processor for all communications or a subset thereof, and in one or more directions (e.g., inbound only, outbound only, or both inbound and outbound). For example, the establishment of the offload agent 417 can include or cause an establishment of a second network stack on the wireless communications interface. In some embodiments, the offload agent 417 is configured to bypass any number of network stacks related to any of various wired or wireless communication channels. In some embodiments, the offload agent 417 is configured to receive updated instruction from an agent 416, such as according to another instruction of a BQUICK server, to manage latency of network communications.

At operation 505, the Bluetooth processor 406 receives data 506 (e.g., a packetized input) from a Bluetooth controller. The data 506 can relate to a latency sensitive application, such as a video game or teleconference. The data 506 can relate to a server 365 remote from the device 400. For example, the data 506 can be received in a packet addressed to the server 365, or which an applications processor or other processor is configured to forward to the server 365.

At operation 507, the offload agent 417 (as may be instantiated at the Bluetooth processor 406) determines a destination for the received data 506. For example, the offload agent 417 can determine that a packet should be routed to only the applications processor, only the Wi-Fi processor 422, or both of the applications processor and the Wi-Fi processor 422. The offload agent 417 can determine the destination based on packet header data (e.g., an address or other identifier associated with the data 506) or a content of the data 506 (e.g., packet inspection). In some embodiments, the determination 508 includes selection of a particular queue of the Wi-Fi processor 422 (e.g., according to a determined priority). The determination 508 can be executed according to criterion received from the agent 416.

At operation 509, the Bluetooth processor 406 communicates data 510, 512 to the destination determined at operation 507. For example, for a packet having contents according with the first data flow 401, the Bluetooth processor 406 communicates data 512 to the applications processor (e.g., a network stack thereof). For a packet having contents according with the second data flow 403, the Bluetooth processor 406 communicates data 510 to the Wi-Fi processor 422. Such a communication can be realized according to a provision of the data 510 to a prioritized queue of the Wi-Fi processor 422 wherein one or more queues of the Wi-Fi processor 422 coupled with the applications processor is associated with a lower priority.

At operation 513, a processor of the destination determined at operation 507 provides the data 514, 516 to a recipient. For data 512 provided to the application processor at operation 507, a subsequent transmission of data 516 can reach the Wi-Fi processor 422. For data 510 provided to the Wi-Fi processor 422 at operation 509 (bypassing the application processor), a subsequent transmission of data 514 to the server 365 can avoid incurring latency related to the applications processor. That is, as is depicted by operation 517, a transmission of data 518 to the server 365 provided via the applications processor may incur additional latency, relative to the transmission of data 514 of operation 513, which bypasses the applications processor.

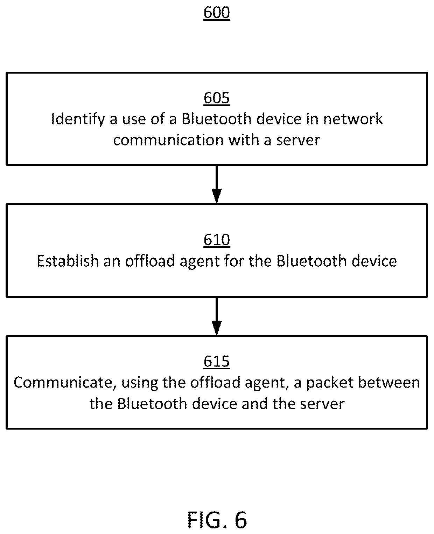

Referring now to FIG. 6, a flow diagram of a method 600 for offloading network processing is provided, according to some embodiments. The method 600 may be performed by a network connected device, or a combination of network connected devices. For example, one or more of operations 605, 610, or 615 may be performed by a set top box 325 or other device 400. Further, the method 600 may be performed in concert with operations of further devices, such as the BQUICK_TOP server 1005 or other latency management devices.

At operation 605, the method 600 includes identifying a Bluetooth device (e.g., Bluetooth controller) is used in network communication with a server 365. For example, an agent 416 on a device 400 having a first and second portion (e.g., chip, module, or SoC) can identify that a Bluetooth controller is being used with the device 400 to communicate with a server 365. The Bluetooth controller can provide data inputs for a video game, teleconference, or other content provided to a display 320. The agent 416 can identify the use according to a pairing of the Bluetooth device or data flow of Bluetooth packets with the Bluetooth device. In some embodiments, the agent 416 is configured to operate based on a detected latency (e.g., locally detected latency or latency detected at a BQUICK_TOP server 1005). In some embodiment, the agent 416 is configured to selectably operate according to a menu selection or configuration file of a hosting device (e.g., STB 325).

At operation 610, the method 600 includes establishing an offload agent 417 for the Bluetooth device. The offload device is established at the second portion of the device 400 so as to bypass the first portion of the device for communications with the server 365. For example, the establishment of the offload agent 417 can cause an instantiation of a full or other network stack away from a first dataflow including a different network stack, so that a second dataflow using the stack instantiated by the offload agent 417 may bypass the other network stack. The establishment of the agent can further include a provision of criterion for selecting a dataflow (e.g., bypassing the stack of the first dataflow).

At operation 615, the method 600 includes communicating, using the offload agent, a packet between the Bluetooth device (e.g., Bluetooth controller) and the server 365. The packet includes or is derived based on the data received from the Bluetooth device (e.g., Bluetooth controller). The packet may be communicated via the network stack instantiated by the offload agent 417. Such a dataflow may reduce latency associated with communication between a first and second SoC or other potions of a STB 325 or other device 400.

In some embodiments, the method 600 can include additional, fewer, or different operations. For example, in some embodiments, the offload agent 417 determines, for each packet or data element thereof, a priority and routes the packet or data element along a data path corresponding with the determined priority. For example, the priority may be determined according to classification criteria received from the establishing agent. The establishing agent may, in turn, receive such information from a BQUICK server, such as a BQUICK_TOP server 1005, so as to aid the BQUICK server to manage latency of network communications.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above-described embodiments, methods, and examples. The headings provided in this document are non-limiting.

The applications and servers have been described above with the aid of functional building blocks illustrating the performance of certain significant functions. The boundaries of these functional building blocks have been arbitrarily defined for convenience of description. Functions and structures can be integrated together across such boundaries. Alternate boundaries could be defined as long as the certain significant functions are appropriately performed. Similarly, flow diagram blocks may also have been arbitrarily defined herein to illustrate certain significant functionality. To the extent used, the flow boundaries and sequence could have been defined otherwise and still perform the certain significant functionality. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A method comprising:
identifying, by an agent (416) on a device (400) having a first system on chip,SoC, (402) with a first processor and a second SoC (404) with a second processor, that a Bluetooth, BT, controller is being used with the device (400), the BT controller to provide input via the second processor for an application of the first processor, network traffic of the application from one or more servers communicated to the device (400) via a network stack of the first processor; the method being **characterized by** comprising :
establishing, by the agent (416) and responsive to the identification, an offload agent (417) on the second processor to route data received via BT by the second processor from the BT controller to the offload agent (417) to communicate, by the second processor via Wi-Fi, to the one or more servers and bypassing the network stack of the first processor; and
communicating, by the second processor, to the one or more servers, one or more packets generated by the second processor, the one or more packets comprising the data received from the BT controller.

2. The method of claim 1, further comprising detecting, by the agent (416), that the BT controller has been paired with the device (400).

3. The method of claim 1 or 2, wherein establishing the offload agent (417) on the second processor further comprises providing, by the agent (416), information about the network stack of the first processor to the second processor.

4. The method of any of claims 1 to 3, wherein establishing the offload agent (417) on the second processor further comprises providing, by the agent (416), a transfer of a state of the network stack of the first processor to the second processor.

5. The method of any of claims 1 to 4, wherein the offload agent (417) is configured to cause the second processor to communicate, via Wi-Fi, the data received from the BT controller via a second network stack of the second processor instead of communicating the data to the first processor.

6. The method of any of claims 1 to 5, wherein the offload agent (417) is further configured to use information about the network stack of the first processor received from the agent (416) to generate the one or more packets, by the second processor, for communicating the one or more packets to the one or more servers for the application.

7. The method of any of claims 1 to 6, wherein the application is being displayed, by the first processor, via a display coupled to the device (400).

8. The method of any of claims 1 to 7, further comprising prioritizing, by the second processor, packets comprising commands from the BT controller.

9. The method of any of claims 1 to 8, wherein the agent (416) is configured to establish another network stack for the application on one of an access point or cable modem to handle retransmission of packets with the one or more servers.

10. A system (400) comprising:
a first system on chip, SoC, (402) comprising a first processor establishing a first network stack for communicating network traffic of an application with one or more servers;
a second SoC (404) comprising a second processor configured to couple to a Bluetooth, BT, controller and to communicate via Wi-Fi packets received from the first network stack;
an agent (416) on the first processor configured to:
identify that the Bluetooth, BT, controller is being used with the device (400), the BT controller to provide data via the second processor for the network traffic of the application;
establish, responsive to the identification, an offload agent (417) on the second processor to route the data received via BT by the second processor from the BT controller to the offload agent (417) to communicate, by the second processor via Wi-Fi, to the one or more servers bypassing the first network stack; and
wherein the second processor is configured to communicate, to the one or more servers, one or more packets generated by the second processor, the one or more packets comprising the data received from the BT controller.

11. The system of claim 10, wherein the agent (416) is further configured to detect that the BT controller has been paired with the device (400).

12. The system of claim 10 or 11, comprising at least one of the following features:
wherein the agent (416) is further configured to provide information about the first network stack to the second processor to establish a second network stack for communicating packets of the application;
wherein the agent (416) is further configured to transfer a state of the first network stack to the second processor to establish a second network stack for communicating packets of the application;
wherein the offload agent (417) is further configured to communicate, via Wi-Fi, the data received from the BT controller via a second network stack of the second processor instead of communicating the data to the first processor.

13. The system of any of claims 10 to 12, comprising at least one of the following features:
wherein the offload agent (417) is further configured to use information about the first network stack received from the agent (416) to generate the one or more packets, by the second processor, for communicating the one or more packets to the one or more servers for the application;
wherein the offload agent (417) is further configured to prioritize transmission of packets comprising commands from the BT controller;
wherein the agent (416) is further configured to establish another network stack for the application on one of an access point or cable modem to handle retransmission of packets with the one or more servers.

14. A device (400) comprising:
a second system on chip, SoC, (404) in communication, via an interface, with a first SoC (402), the first SoC (402) having a first processor configured to provide a network stack for network traffic of an application in communication with the device (400) and one or more servers, the second SoC (404) comprising a second processor configured to:
receive data from a Bluetooth controller coupled to the device (400);
communicate the data to the first processor; and
receive packets from the network stack of the first processor to communicate between the application and the one or more servers; and
wherein the second processor is further **characterized by** being configured to receive, from the first processor, an offload agent (417) to route the data received via BT by the second processor from the BT controller to the offload agent (417) to communicate, via Wi-Fi and by the second processor, to the one or more servers and bypass the network stack of the first processor.

15. The device (400) of claim 14, comprising at least one of the following features:
wherein the second processor is configured to:
classify a first input in the data received from the Bluetooth controller as a first input type, wherein the bypass of the network stack of the first processor is responsive to the classification;
classify a second input in the data received from the Bluetooth controller as a second input type; and
communicate, responsive to the classification of the second input as the second input type, the second input to the network stack of the first processor;
wherein establishing the offload agent (417) on the second processor further comprises a transfer of a state of the network stack of the first processor to the second processor.

## Patentansprüche

1. Ein Verfahren, aufweisend:
Identifizieren, durch einen Agenten (416) auf einer Vorrichtung (400), die ein erstes System-on-Chip, SoC, (402) mit einem ersten Prozessor und ein zweites SoC (404) mit einem zweiten Prozessor hat, dass ein Bluetooth, BT, Controller mit der Vorrichtung (400) verwendet wird, wobei der BT Controller eine Eingabe über den zweiten Prozessor für eine Anwendung des ersten Prozessors bereitstellt, wobei Netzwerkverkehr der Anwendung von einem oder mehreren Servern an die Vorrichtung (400) über einen Netzwerkstapel des ersten Prozessors kommuniziert wird; wobei das Verfahren **dadurch gekennzeichnet ist, dass** es aufweist:
Einrichten, durch den Agenten (416) und ansprechend auf die Identifizierung, eines Offload-Agenten (417) auf dem zweiten Prozessor, um Daten, die über BT durch den zweiten Prozessor empfangen werden, von dem BT Controller zu dem Offload-Agenten (417) zu leiten, um durch den zweiten Prozessor über Wi-Fi an den einen oder die mehreren Server zu kommunizieren und den Netzwerkstapel des ersten Prozessors zu umgehen; und
Kommunizieren, durch den zweiten Prozessor, an den einen oder die mehreren Server, eines oder mehrerer Pakete, die durch den zweiten Prozessor erzeugt werden, wobei das eine oder die mehreren Pakete die Daten aufweisen, die von dem BT Controller empfangen werden.

2. Das Verfahren gemäß Anspruch 1, ferner aufweisend Detektieren, durch den Agenten (416), dass der BT Controller mit der Vorrichtung (400) gepaart wurde.

3. Das Verfahren gemäß Anspruch 1 oder 2, wobei Einrichten des Offload-Agenten (417) auf dem zweiten Prozessor ferner aufweist Bereitstellen, durch den Agenten (416), von Information über den Netzwerkstapel des ersten Prozessors an den zweiten Prozessor.

4. Das Verfahren gemäß einem der Ansprüche 1 bis 3, wobei Einrichten des Offload-Agenten (417) auf dem zweiten Prozessor ferner aufweist Bereitstellen, durch den Agenten (416), einer Übertragung eines Zustands des Netzwerkstapels des ersten Prozessors an den zweiten Prozessor.

5. Das Verfahren gemäß einem der Ansprüche 1 bis 4, wobei der Offload-Agent (417) konfiguriert ist, um den zweiten Prozessor zu veranlassen, über Wi-Fi die Daten, die von dem BT Controller empfangen werden, über einen zweiten Netzwerkstapel des zweiten Prozessors zu kommunizieren, anstatt die Daten an den ersten Prozessor zu kommunizieren.

6. Das Verfahren gemäß einem der Ansprüche 1 bis 5, wobei der Offload-Agent (417) ferner konfiguriert ist, um Information über den Netzwerkstapel des ersten Prozessors, die von dem Agenten (416) empfangen wird, zu verwenden, um das eine oder die mehreren Pakete zu erzeugen, durch den zweiten Prozessor, zum Kommunizieren des einen oder der mehreren Pakete an den einen oder die mehreren Server für die Anwendung.

7. Das Verfahren gemäß einem der Ansprüche 1 bis 6, wobei die Anwendung angezeigt wird, durch den ersten Prozessor, über eine Anzeige, die mit der Vorrichtung (400) gekoppelt ist.

8. Das Verfahren gemäß einem der Ansprüche 1 bis 7, ferner aufweisend Priorisieren, durch den zweiten Prozessor, von Paketen, die Befehle von dem BT Controller aufweisen.

9. Das Verfahren gemäß einem der Ansprüche 1 bis 8, wobei der Agent (416) konfiguriert ist, um einen anderen Netzwerkstapel für die Anwendung auf einem von einem Zugangspunkt oder einem Kabelmodem einzurichten, um Neuübertragung von Paketen mit dem einen oder den mehreren Servern zu handhaben.

10. Ein System (400), aufweisend:
ein erstes System-on-Chip, SoC, (402), das einen ersten Prozessor aufweist, der einen ersten Netzwerkstapel einrichtet zum Kommunizieren von Netzwerkverkehr einer Anwendung mit einem oder mehreren Servern;
ein zweites SoC (404), das einen zweiten Prozessor aufweist, der konfiguriert ist, um mit einem Bluetooth, BT, Controller zu koppeln und über Wi-Fi Pakete zu kommunizieren, die von dem ersten Netzwerkstapel empfangen werden;
einen Agenten (416) auf dem ersten Prozessor, der konfiguriert ist zum:
Identifizieren, dass der Bluetooth, BT, Controller mit der Vorrichtung (400) verwendet wird, wobei der BT Controller Daten über den zweiten Prozessor für den Netzwerkverkehr der Anwendung bereitstellt;
Einrichten, ansprechend auf die Identifizierung, eines Offload-Agenten (417) auf dem zweiten Prozessor, um die Daten, die über BT durch den zweiten Prozessor empfangen werden, von dem BT Controller zu dem Offload-Agenten (417) zu leiten, um durch den zweiten Prozessor über Wi-Fi an den einen oder die mehreren Server zu kommunizieren und den ersten Netzwerkstapel zu umgehen; und
wobei der zweite Prozessor konfiguriert ist, um an den einen oder die mehreren Server ein oder mehrere Pakete zu kommunizieren, die durch den zweiten Prozessor erzeugt werden, wobei das eine oder die mehreren Pakete die Daten aufweisen, die von dem BT Controller empfangen werden.

11. Das System gemäß Anspruch 10, wobei der Agent (416) ferner konfiguriert ist, um zu detektieren, dass der BT Controller mit der Vorrichtung (400) gepaart wurde.

12. Das System gemäß Anspruch 10 oder 11, das zumindest eines der folgenden Merkmale aufweist:
wobei der Agent (416) ferner konfiguriert ist, um Information über den ersten Netzwerkstapel an den zweiten Prozessor bereitzustellen, um einen zweiten Netzwerkstapel einzurichten zum Kommunizieren von Paketen der Anwendung;
wobei der Agent (416) ferner konfiguriert ist, um einen Zustand des ersten Netzwerkstapels an den zweiten Prozessor zu übertragen, um einen zweiten Netzwerkstapel einzurichten zum Kommunizieren von Paketen der Anwendung;
wobei der Offload-Agent (417) ferner konfiguriert ist, um über Wi-Fi die Daten, die von dem BT Controller empfangen werden, über einen zweiten Netzwerkstapel des zweiten Prozessors zu kommunizieren, anstatt die Daten an den ersten Prozessor zu kommunizieren.

13. Das System gemäß einem der Ansprüche 10 bis 12, das zumindest eines der folgenden Merkmale aufweist:
wobei der Offload-Agent (417) ferner konfiguriert ist, um Information über den ersten Netzwerkstapel, die von dem Agenten (416) empfangen wird, zu verwenden, um das eine oder die mehreren Pakete zu erzeugen, durch den zweiten Prozessor, zum Kommunizieren des einen oder der mehreren Pakete an den einen oder die mehreren Server für die Anwendung;
wobei der Offload-Agent (417) ferner konfiguriert ist, um eine Übertragung von Paketen zu priorisieren, die Befehle von dem BT Controller aufweisen;
wobei der Agent (416) ferner konfiguriert ist, um einen anderen Netzwerkstapel für die Anwendung auf einem von einem Zugangspunkt oder einem Kabelmodem einzurichten, um Neuübertragung von Paketen mit dem einen oder den mehreren Servern zu handhaben.

14. Eine Vorrichtung (400), aufweisend:
ein zweites System-on-Chip, SoC, (404) in Kommunikation, über eine Schnittstelle, mit einem ersten SoC (402), wobei das erste SoC (402) einen ersten Prozessor hat, der konfiguriert ist, um einen Netzwerkstapel bereitzustellen für Netzwerkverkehr einer Anwendung in Kommunikation mit der Vorrichtung (400) und einem oder mehreren Servern, wobei das zweite SoC (404) einen zweiten Prozessor aufweist, der konfiguriert ist zum:
Empfangen von Daten von einem Bluetooth Controller, der mit der Vorrichtung (400) gekoppelt ist;
Kommunizieren der Daten an den ersten Prozessor; und
Empfangen von Paketen von dem Netzwerkstapel des ersten Prozessors zum Kommunizieren zwischen der Anwendung und dem einen oder den mehreren Servern; und
wobei der zweite Prozessor ferner **dadurch gekennzeichnet ist, dass** er konfiguriert ist, um von dem ersten Prozessor einen Offload-Agenten (417) zu empfangen, um die Daten, die über BT durch den zweiten Prozessor empfangen werden, von dem BT Controller zu dem Offload-Agenten (417) zu leiten, um über Wi-Fi und durch den zweiten Prozessor an den einen oder die mehreren Server zu kommunizieren und den Netzwerkstapel des ersten Prozessors zu umgehen.

15. Die Vorrichtung (400) gemäß Anspruch 14, die zumindest eines der folgenden Merkmale aufweist:
wobei der zweite Prozessor konfiguriert ist zum:
Klassifizieren einer ersten Eingabe in den Daten, die von dem Bluetooth Controller empfangen werden, als einen ersten Eingabetyp, wobei das Umgehen des Netzwerkstapels des ersten Prozessors ansprechend auf die Klassifizierung ist;
Klassifizieren einer zweiten Eingabe in den Daten, die von dem Bluetooth Controller empfangen werden, als einen zweiten Eingabetyp; und
Kommunizieren, ansprechend auf die Klassifizierung der zweiten Eingabe als den zweiten Eingabetyp, der zweiten Eingabe an den Netzwerkstapel des ersten Prozessors;
wobei Einrichten des Offload-Agenten (417) auf dem zweiten Prozessor ferner aufweist eine Übertragung eines Zustands des Netzwerkstapels des ersten Prozessors an den zweiten Prozessor.

## Revendications

1. Procédé, comprenant :
une identification, par l'intermédiaire d'un agent (416) sur un dispositif (400) présentant un premier système sur puce, SoC, (402) avec un premier processeur et d'un second SoC (404) avec un second processeur, qu'un dispositif de commande Bluetooth, BT, est utilisé avec le dispositif (400), le dispositif de commande BT permettant de fournir une entrée via le second processeur pour une application du premier processeur, un trafic de réseau de l'application à partir d'un ou plusieurs serveurs communiqué au dispositif (400) via une pile de réseau du premier processeur ;
le procédé étant **caractérisé en ce qu'**il comprend les étapes consistant à :
établir, par l'intermédiaire de l'agent (416) et en réponse à l'identification, un agent de déchargement (417) sur le second processeur pour acheminer des données reçues via BT par l'intermédiaire du second processeur depuis le dispositif de commande BT vers l'agent de déchargement (417) pour communiquer, par l'intermédiaire du second processeur via Wi-Fi, avec les un ou plusieurs serveurs et contourner la pile de réseau du premier processeur ; et
communiquer, par l'intermédiaire du second processeur, aux un ou plusieurs serveurs, un ou plusieurs paquets générés par le second processeur, les un ou plusieurs paquets comprenant les données reçues du dispositif de commande BT.

2. Procédé selon la revendication 1, comprenant en outre une détection, par l'intermédiaire de l'agent (416), que le dispositif de commande BT a été apparié avec le dispositif (400).

3. Procédé selon la revendication 1 ou 2, dans lequel l'établissement de l'agent de déchargement (417) sur le second processeur comprend en outre la fourniture, par l'agent (416), d'informations sur la pile de réseau du premier processeur au second processeur.

4. Procédé selon l'une quelconque des revendications 1 à 3, dans lequel l'établissement de l'agent de déchargement (417) sur le second processeur comprend en outre la fourniture, par l'intermédiaire de l'agent (416), d'un transfert d'un état de la pile de réseau du premier processeur au second processeur.

5. Procédé selon l'une quelconque des revendications 1 à 4, dans lequel l'agent de déchargement (417) est configuré pour amener le second processeur à communiquer, via Wi-Fi, les données reçues depuis le dispositif de commande BT via une seconde pile de réseau du second processeur au lieu de communiquer les données au premier processeur.

6. Procédé selon l'une quelconque des revendications 1 à 5, dans lequel l'agent de déchargement (417) est en outre configuré pour utiliser des informations sur la pile de réseau du premier processeur reçues depuis l'agent (416) pour générer les un ou plusieurs paquets, par l'intermédiaire du second processeur, afin de communiquer les un ou plusieurs paquets aux un ou plusieurs serveurs pour l'application.

7. Procédé selon l'une quelconque des revendications 1 à 6, dans lequel l'application est affichée, par l'intermédiaire du premier processeur, via un affichage couplé au dispositif (400).

8. Procédé selon l'une quelconque des revendications 1 à 7, comprenant en outre l'étape consistant à donner priorité, par l'intermédiaire du second processeur, à des paquets comprenant des instructions provenant du dispositif de commande BT.

9. Procédé selon l'une quelconque des revendications 1 à 8, dans lequel l'agent (416) est configuré pour établir une autre pile de réseau pour l'application sur l'un d'un point d'accès ou d'un modem à câble afin de gérer la retransmission de paquets avec les un ou plusieurs serveurs.

10. Système (400), comprenant :
un premier système sur puce, SoC, (402) comprenant un premier processeur établissant une première pile de réseau pour communiquer un trafic de réseau d'une application avec un ou plusieurs serveurs ;
un second SoC (404) comprenant un second processeur configuré pour se coupler à un dispositif de commande Bluetooth, BT, et pour communiquer via des paquets Wi-Fi reçus à partir de la première pile de réseau ;
un agent (416) sur le premier processeur configuré pour :
identifier que le dispositif de commande Bluetooth, BT, est utilisé avec le dispositif (400), le dispositif de commande BT permettant de fournir des données via le second processeur pour le trafic de réseau de l'application ;
Établir, en réponse à l'identification, un agent de déchargement (417) sur le second processeur pour acheminer les données reçues via BT par l'intermédiaire du second processeur depuis le dispositif de commande BT vers l'agent de déchargement (417) pour communiquer, par l'intermédiaire du second processeur via Wi-Fi, avec les un ou plusieurs serveurs et contournant la première pile de réseau ; et
dans lequel le second processeur est configuré pour communiquer, aux un ou plusieurs serveurs, un ou plusieurs paquets générés par le second processeur, les un ou plusieurs paquets comprenant les données reçues du dispositif de commande BT.

11. Système selon la revendication 10, dans lequel l'agent (416) est en outre configuré pour détecter que le dispositif de commande BT a été apparié avec le dispositif (400).

12. Système selon la revendication 10 ou 11, comprenant au moins une des caractéristiques suivantes :
dans lequel l'agent (416) est en outre configuré pour fournir des informations sur la première pile de réseau au second processeur afin d'établir une seconde pile de réseau pour communiquer des paquets de l'application ;
dans lequel l'agent (416) est en outre configuré pour transférer un état de la première pile de réseau au second processeur pour établir une seconde pile de réseau pour communiquer des paquets de l'application ;
dans lequel l'agent de déchargement (417) est en outre configuré pour communiquer, via Wi-Fi, les données reçues depuis le dispositif de commande BT via une seconde pile de réseau du second processeur au lieu de communiquer les données au premier processeur.

13. Système selon l'une quelconque des revendications 10 à 12, comprenant au moins l'une des caractéristiques suivantes :
dans lequel l'agent de déchargement (417) est en outre configuré pour utiliser des informations sur la première pile de réseau reçues depuis l'agent (416) pour générer les un ou plusieurs paquets, par l'intermédiaire du second processeur, afin de communiquer les un ou plusieurs paquets aux un ou plusieurs serveurs pour l'application.
dans lequel l'agent de déchargement (417) est en outre configuré pour donner la priorité à la transmission de paquets comprenant des instructions provenant du dispositif de commande BT ;
dans lequel l'agent (416) est configuré pour établir une autre pile de réseau pour l'application sur l'un d'un point d'accès ou d'un modem à câble afin de gérer la retransmission de paquets avec les un ou plusieurs serveurs.

14. Dispositif (400), comprenant :
un second système sur puce, SoC, (404) en communication, via une interface, avec un premier SoC (402), le premier SoC (402) présentant un premier processeur configuré pour fournir une pile de réseau pour un trafic de réseau d'une application en communication avec le dispositif (400) et un ou plusieurs serveurs, le second SoC (404) comprenant un second processeur configuré pour :
recevoir des données provenant d'un dispositif de commande Bluetooth couplé au dispositif (400) ;
communiquer les données au premier processeur ; et
recevoir des paquets depuis la pile de réseau du premier processeur pour communiquer entre l'application et les un ou plusieurs serveurs ; et
dans lequel le second processeur est en outre **caractérisé en ce qu'**il est configuré pour recevoir, depuis le premier processeur, un agent de déchargement (417) pour acheminer les données reçues via BT par l'intermédiaire du second processeur depuis le dispositif de commande BT vers l'agent de déchargement (417) pour communiquer, via Wi-Fi et par l'intermédiaire du second processeur, avec les un ou plusieurs serveurs et contourner la pile de réseau du premier processeur.

15. Dispositif selon la revendication 14, comprenant au moins une des caractéristiques suivantes :
dans lequel le second processeur est configuré pour :
classer une première entrée dans les données reçues depuis le dispositif de commande Bluetooth en tant que premier type d'entrée, dans lequel le contournement de la pile de réseau du premier processeur est sensible à la classification ;
classer une seconde entrée dans les données reçues depuis le dispositif de commande Bluetooth en tant que second type d'entrée ; et
communiquer, en réponse à la classification de la seconde entrée en tant que second type d'entrée, la seconde entrée à la pile de réseau du premier processeur ;
dans lequel l'établissement de l'agent de déchargement (417) sur le second processeur comprend en outre un transfert d'un état de la pile de réseau du premier processeur vers le second processeur.
